# EUROPEAN PATENT SPECIFICATION

(11) **EP 1 479 602 B1**
(45) Date of publication and mention of the grant of the patent: **15.02.2012**
(21) Application number: 04076488.8
(22) Date of filing: 19.05.2004
(51) Int. Cl.: B62K 25/02

(54) **Rear fork pads with packing pieces**
Hinteres Endstück mit Einsatzteilen
Patte de cadre arrière avec pièces d'insertion

(30) Priority: 19.05.2003 NL 1023459
(43) Date of publication of application: 24.11.2004
(73) Proprietor: Batavus B.V., 8444 AR Heerenveen (NL)
(72) Inventor: Van Berkum, Jan, 9051 GA Stiens (NL)
(74) Representative: Jansen, Cornelis Marinus

(56) References cited:
- EP-A- 0 244 885
- DE-U- 9 018 008
- DE-U- 9 104 109
- FR-A- 562 618
- US-A- 4 805 941
- US-A- 4 856 802
- US-A- 5 096 215

## Description

The invention relates to a rear fork pad for a bicycle.

DE9018008U discloses a rear fork pad according to the pre-characterizing portion of claim 1.

Also a rear fork pad system is known from practice. For particular models of bicycles, it is desirable that during manufacture the bicycle frame can be equipped with different driving systems as desired. One possibility that is desired in many cases is for the bicycle to be equipped with a derailleur gearing system with a spring-loaded chain adjuster, comprising a pivoting arm with chain diverting rollers which, energized by spring force, keeps the chain tensioned and, upon shifting gear, accommodates the change in the circumference of the blade or the set of sprockets over which the chain runs. Other options that are often desirable for the same frame are a gearing system without spring-loaded chain adjuster or a fixed transmission ratio, that is, without gearing system with different transmission ratios between which gear shifts can be made.

In the latter two cases, the chain is tensioned by suitably choosing the position of the axle of the rear wheel in the slots in the rear pads, optionally with the aid of an adjustable, rigid chain adjuster, as described, for instance, in the Dutch patent application 8600479. To that end, the rear wheel is pulled backwards to tension the chain and subsequently nuts are tightened onto the rear axle ends, so that the rear pads are clamped between those nuts and fixed portions of the rear wheel bearing.

If a derailleur gearing system with spring-loaded chain adjuster is used, the rear wheel, during assembly, is pulled backwards until the axle of the rear wheel butts against the closed ends of the slots in the rear pads, and subsequently nuts or rapid tensioners are tightened, so that the rear pads are clamped between those clamping elements and fixed portions of the rear wheel bearing.

In order to be able to use identical frames with identical rear forks both for bicycles intended to be completed with a spring-loaded chain adjuster and for bicycles not provided with a chain adjuster, the right-hand rear pad is composed of a fixed pad member and:
- either, if the bicycle is to be equipped with a gearing system with spring-loaded chain adjuster, a packing piece having an arm projecting relative to the fixed pad member, to which the chain adjuster can be attached,
- or, if the bicycle is not equipped with a gearing system with spring-loaded chain adjuster, a packing piece without the arm projecting relative to the fixed pad member.

A disadvantage of such a system is that the rear wheel, if the bicycle is provided with a spring-loaded chain adjuster, during mounting in the rear fork, needs to be pulled against the spring force exerted on the chain by the chain adjuster, towards the rear end of the bicycle and needs to be retained in order to have the axle reliably abut against the closed ends of the slots when securing the clamping elements.

For rear forks of bicycle frames intended to be finished exclusively with a gearing system with a chain adjuster, it is known to provide the rear pads with slots which, from a downwardly facing open end, extend substantially vertically upwards. When using such rear pads, the axle of the rear wheel, when it is being mounted in the rear fork, already comes to lie automatically against the closed ends of the slots owing to the weight of the bicycle, while the position of the ends of the axle in the driving direction is already determined by their confinement within the slots. As a result, mounting the rear wheel can be carried out relatively easily by the user. With such rear pads, demounting the rear wheel is also simple in that the rear wheel readily falls out of the rear fork when the clamping elements have been detached and the bicycle is lifted by the rear end thereof.

It is an object of the invention to provide a rear fork pad which, while preserving the suitability of a rear fork for completion with or without a spring-loaded chain adjuster, as desired, enables simpler mounting and demounting of the rear wheel if the bicycle is equipped with a gearing system with a chain adjuster which keeps the chain tensioned by spring force.

This object is realized according to the invention by providing a rear fork pad according to independent claim 1. Such a rear fork pad, which comprises a first packing piece, may, according to dependent claim 8. be part of a rear fork pad system, which system further comprises a second packing piece. The invention can also be embodied in a rear fork according to dependent claim 13 and a bicycle frame according to dependent claim 16 which are provided with such rear fork pads.

When using the rear fork pad according to the invention, the rear wheel of a bicycle with a spring-loaded chain adjuster and associated first packing piece or associated first packing pieces does not need to be pulled rearwards to the end of the slot in the fixed pad member in order to bring the axle of the rear wheel into abutment with a stop which defines the position of the rear axle in the driving direction of the bicycle. In a bicycle without spring-loaded chain adjuster, composed starting from the rear fork pad system according to the invention, the second portion of the slot bounded by the second packing piece or the second packing pieces - which second portion forms a continuation of the slot in *inter alia* the fixed pad member - ensures that the total length of the slot in the rear pad provides a sufficiently large adjusting range for tensioning the chain.

As the second packing piece or the second packing pieces for use without a chain adjuster forms or form the boundary of a slot portion in line with the slot in the fixed pad member, such boundary can be omitted wholly or partly if the first packing piece or the first packing pieces intended for use with a spring-loaded chain adjuster is or are mounted. Therefore, when mounting and demounting a rear axle, it does not need to be passed along a boundary of a slot portion which is not needed when a spring-loaded chain adjuster is used.

Particular aspects of the invention are laid down in the dependent claims.

Below, further aspects, effects and details of the invention are illustrated and elucidated in more detail on the basis of an exemplary embodiment with reference to the drawing, in which:
Fig. 1 shows an exploded perspective view of an exemplary embodiment of a rear fork pad used in connection with the invention;
Fig. 2 shows a side elevation of a rear fork pad according to an exemplary embodiment of the invention;
Fig. 3 shows a side elevation of the rear fork pad according to Fig. 1;
Fig. 4 shows a side elevation of a packing piece of the rear pad according to Fig. 2;
Fig. 5 shows a side elevation of a packing piece of the rear pad according to Figs. 1 and 3; and
Fig. 6 shows a side elevation of a fixed pad member of the rear pads according to Figs. 1-5.

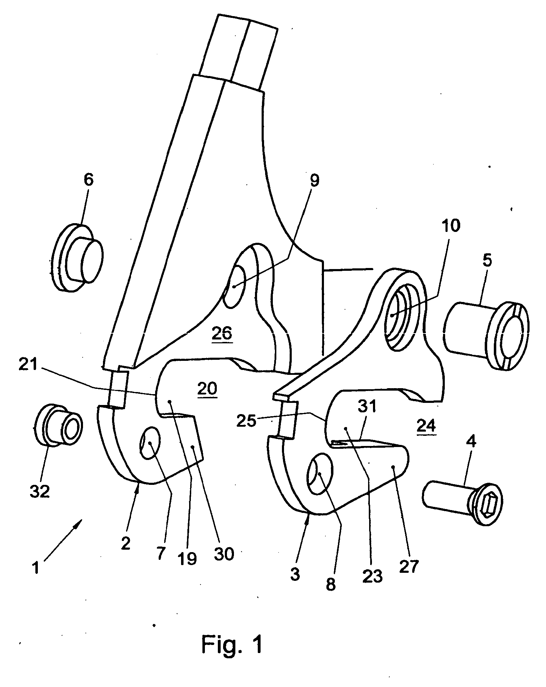

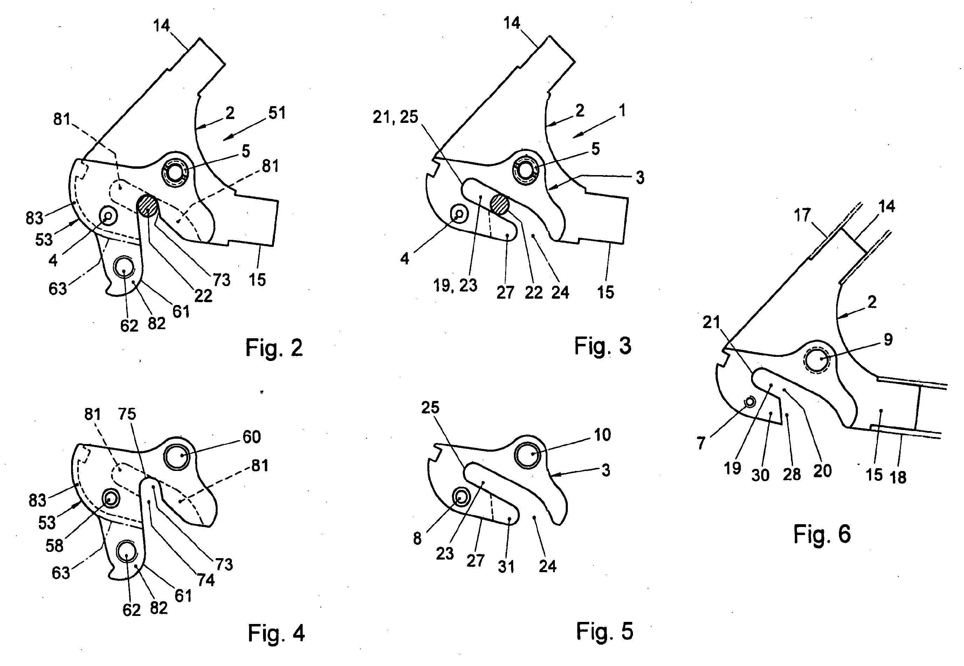

The rear pad 1, shown in the drawing, according to Figs. 1, 3, 5 and 6 and the rear pad 51 according to Figs. 2, 4 and 6 are rear pads of an example of a rear pad system according to the invention. The rear pad system shown is made up of a fixed rear pad member 2 which is the same for both designs of the rear pads 1, 51 to be composed with this system, and different packing pieces 3 and 53, respectively. According to these examples of the invention, the rear pad system further comprises fastening elements 4, 5, 6, 32. According to this example, these fastening elements are designed as an internal wrenching bolt 4 and a sleeved nut 32, for fastening through a hole 7 in the fixed pad member 2 and through a hole 8, 58 in the packing piece 3, 53, and further as an internal wrenching bolt 5 and a sleeved nut 6, for fastening through holes 9, 10, 60 in the fixed pad member 2 and the packing piece 3 and 53, respectively.

The rear pad system according to the example shown serves for composing rear pads on the right-hand side of the rear wheel, or at least the side where the spring-loaded chain adjuster is mounted. For mounting the spring-loaded chain adjuster, the packing piece 53 is provided with an arm 61 having therein a mounting hole 62. Optionally, the fixed pad member 2 or the packing piece 53 may be provided with further holes for receiving fastening elements of the spring-loaded chain adjuster. The parts for composing an associated rear pad on the left-hand side of the rear wheel form, with respect to the central median plane of the bicycle, a mirrored copy of the rear pads 1, 51 shown. This also holds for the parts 3-6. An exception to this is the packing piece 53 for use in combination with a derailleur gearing system with spring-loaded chain adjuster. The associated packing piece for composing the rear pad on the left-hand side of the rear wheel is not provided with an arm 61 for fastening the spring-loaded chain adjuster, but instead of that arm 61 has a contour of a configuration as is indicated with a chain-dotted line 63.

In the following, a rear fork pad 1 to be composed with the rear fork pad system according to the invention, for a bicycle without spring-loaded chain adjuster, is described in more detail with reference to the example of a rear pad 1 shown in Figs. 1 and 3. Figs. 5 and 6 show the packing piece and the fixed packing member of such a rear fork pad 1 separately.

The fixed pad member 2, which is identical for both kinds of rear fork pads 3, 53 to be composed with the rear fork pad system according to the invention, has mounting portions in the form of lips 14, 15 for attachment to legs 17, 18 (see Fig. 6) of a rear fork of a bicycle. In the fixed pad member 2, further, a slot 19 with an open end 20 and a closed end 21 is recessed, for receiving a portion of a rear wheel axle 22 which extends transversely to and through the slot 19.

The packing piece 3 bounds a slot 23 having an open end 24 and a closed end 25, likewise for receiving a portion of a rear wheel axle 22. According to this example, the slot 23 is moreover recessed in the packing piece 3. It is also possible, however, that the packing piece bounds the slot wholly or partly on just one side, for instance the underside. In mounted condition, the packing piece 3 lies along a contact surface against the fixed pad member 2 to be clamped with the fixed pad member 2 between a clamping element and a stop on the axle 22 which extends through the slot 23 in the packing piece 3.

The fixed pad member 2 and the packing piece 3 are designed for positioning the packing piece 3 relative to the fixed pad member 2. To this end, according to this example, the fixed pad member 2 is provided with a recess 26. In the area of the recess 26 the fixed pad member 2 has a thickness which is less than the rest, or at least surrounding portions, of the fixed pad member 2. The depth of the recess 26 corresponds to the thickness of the packing piece 3, so that the rear pad 1 upon placement of the packing piece 3 is as thick in the area of the recess 26 in the fixed pad member 2 as in surrounding portions of the fixed pad member 2. The contour of the recess 26 in the fixed pad member 2 closely conforms to the contour of the packing piece 3, so that the latter in mounted condition is held accurately positioned in the recess 26. The fastening elements 4-6 can serve as dowel pins for positioning the packing piece 3 relative to the fixed pad member in cooperation with the holes 7-10 in the fixed pad member 2 and in the packing piece 3. The fastening elements further serve for keeping the packing piece 3 in place against the fixed pad member 2 if the rear wheel is not mounted in the rear fork.

The slot 19 in the fixed pad member 2 and a first portion of the slot 23 in the packing piece 3 remote from the open end 24 of the slot 23 in the packing piece 3 form a common slot portion. A second portion of the slot 23, between the first portion and the open end 24 thereof, forms a continuation of the common slot.

Thus, on the one hand, the slot 19, 23 has sufficient length to provide an adjusting range for the position of the rear axle 22 in the driving direction of the bicycle, which enables the chain to be tensioned sufficiently. On the other hand, the fixed pad member 2 bounds only a first portion 19 of the slot 19, 23 contiguous to the closed end 21, and the second portion of the slot 23, at least on one side, is bounded exclusively by the packing piece 3. As a result, upon removal of the packing piece 3, an area contiguous to the slot 23 - according to this example under the nominal position of the rear axle 22 - is cleared. Via this cleared area, when using the alternative packing piece 53 - in which case adjustability in the pull direction of the chain is not needed - a rear wheel can be fitted more easily.

The packing piece 3 has a free, projecting leg 27 which in operating position forms a lower boundary of the slot 23 in the packing pieces 3, and which extends alongside and beyond the underside of leg 30 of the fixed pad member 2, bounding the slot 19. As a result, the area that can be left clear if a different packing piece than the packing piece 3 is mounted for use with a chain drive without spring-loaded chain adjuster, is situated under the slot 19, 23 in the rear fork pad 1 with the packing piece 3. This is particularly advantageous because especially by taking out the rear wheel axle downwards from the mounted position, or by mounting it in upward direction to the intended position in the rear fork pads, a rear wheel can be particularly simply mounted and demounted, respectively.

The rear fork pad according to the alternative embodiment 51, intended for bicycles having a gearing system with spring-loaded chain adjuster, which can be composed starting from the same fixed pad member 2 but through combination with the other packing piece 53, is shown in Fig. 2. Figs. 4 and 6 show the packing piece and the fixed pad member 2 separately.

The packing piece 53 bounds a second slot 73 having an open end 74 and a closed end 75. In mounted condition, this packing piece 53 also extends along a contact surface against the fixed pad member 2, to be clamped with the fixed pad member 2 between a clamping member and a stop on the rear wheel axle 22 which extends through the slot 73 which is bounded by the packing piece 53.

Further, also when using the packing piece 53, the fixed pad member 2 and the packing piece 53 are designed for positioning the packing piece 53 relative to the fixed pad member 2 by means of a closely conforming fit of the packing piece 53 in the recess 26 and optionally supplemented by a dowel pin effect of the fastening elements 4-6 relative to the holes 7-10.

The packing piece 53 covers the greater part of the slot 19 in the fixed pad member 2 for keeping the axle 22 received in the rear fork pad 51 spaced from the end 21 of the slot 19 in the fixed pad member 2. As a result, during mounting, the axle 22 does not need to be pulled backwards as far as the end 21 of the slot 19, which facilitates mounting. Also, as a result, displacement in the opposite direction away from the end 21 of the slot 19 during demounting is not necessary anymore. As a result, furthermore, the position of the axle 22 in mounted condition corresponds better to the nominal position of the axle 22 when using a gearing system without spring-loaded chain adjuster, where the chain prevents the rear wheel axle 22 being pulled all the way against the end 21 of the slot 19.

Since in the packing piece 3, for use in combination without a spring-loaded chain adjuster, the leg 27 forms the only lower boundary of a portion of the slot 23 contiguous to the open end 24, in which the axle 22 is situated, the leg 30 of the fixed pad member 2, which extends along the slot 19, is relatively short. The leg 30 of the fixed pad member 2 situated under the slot 19 thus impedes removal and fitting of the rear wheel axle 22 at the least considerably less than would be the case if this leg were to extend to a point near the open end 24 of the slot 23 in the rear pad 1 according to Figs. 1 and 3.

The slot 74 in the packing piece 53 extends at an angle relative to the slot 19 in the fixed pad member 2.

Thus, the rear wheel of the bicycle can be readily fitted by lowering the bicycle, with the slot 73 above the rear axle 22, downwards until the axle 22 abuts against the end 75 of the slot 73. The position of the axle 22 in the pull direction of the chain is then determined by the position of the end 75 of the slot 73, against which the axle 22, due to the weight of the bicycle, remains lodged inherently and reliably. It is therefore not necessary to keep the rear axle 22 positioned against the closed end 75 of the slot 73 by hand until the clamping elements for clamping the rear pads have been operated. It is then of particular advantage that the slot 73 in the packing piece 53, in the service position, extends approximately vertically downwards from the closed end 75 thereof. This is also advantageous when taking out the rear wheel, because upon lifting the bicycle by the rear end thereof, with the clamping elements of the rear wheel axle removed, the rear wheel axle will generally move of itself out of the rear fork pads 51.

It is possible to provide that the slot in the fixed pad member 2 and the slot bounded by the packing piece for use in combination with a spring-loaded chain adjuster do not overlap, or hardly so. However, by providing that centerlines of these slots 19, 73 intersect, a compact construction of the rear pads 1, 51 is promoted.

As, further, the closed end 75 of the slot 73 in the packing piece 53 for use in combination with a spring-loaded chain adjuster is situated at a distance from the position where centerlines of the slots in the fixed pad member 2 and in this packing piece 53 intersect, that is equal to half of the width of the slot 73 in this packing piece 53, the centerline of a rear wheel axle 22 in the end position in the slot 73 in this packing piece 53 also intersects the centerline of the slot 19 in the fixed pad member 2. As a result, the centerline of a wheel in a rear fork pad 51 with packing piece 53 for use in combination with a spring-loaded chain adjuster, just like the centerline of a wheel in a rear fork pad 1 with packing piece 3 intended for use without spring-loaded chain adjuster, will lie in a plane defined by the centerline of the slot 19 in the fixed pad member 2. Accordingly, the position of the rear wheel in the frame when using one packing piece 3 will correspond to a large extent with the position of the rear wheel when using the other packing piece 53. This is advantageous not only for obtaining corresponding riding properties, but also for obtaining a corresponding outward appearance of the bicycle as a whole for the two designs, as well as the possibility of mounting neighboring parts, such as rim brakes, dynamo and mudguards for bicycles with and without spring-loaded chain adjuster, in the same position.

In the rear pads 1, 51 according to the examples shown, the fixed pad member 2 is a plate extending in a plane, with a contour seen in a view transverse to that plane. The packing piece 3 or 53 extends in a plane parallel to the plane in which the planar pad member 2 extends. Seen in a view transverse to those planes, the packing pieces 3, 53 also each have a contour. In an area where the contour of the packing piece 3 or 53 projects outside the contour of the fixed pad member, the packing pieces each have thickened portions 31, 81, 82, 83. These thickened portions form a filling in line with the fixed pad member 2 within the contour of the respective packing piece, so that an improved strength is realized and the packing piece 3, 53 is more accurately clamped between the respective clamping element and the fixed part of the rear wheel hub.

According to this example, two of the thickened portions 31, 81 of the packing pieces 3, 53 form a filling bounding, or situated in, the first slot 19 in the fixed pad member 2 and within the second contour, so that the supporting surface of the rear fork pads against the rear axle is enlarged.

The packing piece 53, which is intended for supporting a derailleur arm, further has thickened portions 82, 83 along an edge of the fixed pad member 2 that is remote from the slot for receiving the rear axle 3, which portions are contiguous to the fixed pad member 2. These thickenings 82 and 83 thus contribute to a reliable fixation of the packing piece 53 relative to the fixed pad member 2.

In contrast with the known rear pads with packing pieces, which are applied exclusively on the side of the bicycle where optionally the arm of the spring-loaded chain adjuster is mounted, the rear fork pads according to the invention are preferably applied on both sides of the rear fork, in order to enable the wheel, when using a spring-loaded chain adjuster, to be mounted easily, and, without use of a spring-loaded chain adjuster, to obtain on both sides of the rear fork a rear pad with a sufficiently long slot for adjusting the rear axle in the pull direction of the chain.

By the use of the rear pads according to the invention, a bicycle frame can be finished with or without a gearing system with spring-loaded chain adjuster, as desired, while on the one hand, in case the bicycle is finished without a gearing system with spring-loaded chain adjuster, a sufficient adjustability of the rear axle in horizontal direction is obtained for tensioning the chain, and on the other hand, in case the bicycle is finished with a gearing system with spring-loaded chain adjuster, a rear wheel mountability and demountability that is simple for the user in particular is realized, which is equal to that of frames with rear pads which are exclusively designed to be finished with a gearing system with spring-loaded chain adjuster.

It will be clear to those skilled in the art that within the framework of the present invention, many other embodiments than the embodiments discussed above and shown in the drawing are possible. Thus, for instance, the packing pieces, instead of being mounted on the outsides of the fixed pad portions, can also be mounted on the insides of the fixed pad portions. This makes it possible, for instance, by using packing pieces that have such a thickness that the assembled rear fork pad, at least in a partial area within the contour, has a greater thickness than outside the contour of the packing piece, to adjust the distance between the rear fork pads, so that mounting rear wheels with hubs of different axial formats is made possible without bending the rear fork. In that case, in a rear fork with an axial distance between the pads, suitable for receiving a largest one of a number of different hubs, for instance both rear wheel hubs with and without gearing, as well as with different numbers of gear wheels of a derailleur gearing system can be mounted.

It is also possible, for instance, to mount the left-hand packing piece on the inside of the respective fixed pad portion and to mount the right-hand packing piece on the outside of the respective pad portion, or the other way around. By thus mounting both packing pieces either to the right or to the left of the fixed pad portions, the possibility arises of making the left-hand and right-hand fixed pad portions of identical design, which yields a saving on the variety of parts. Also the packing pieces for versions without spring-loaded chain adjuster can then be made of mutually identical design.

Furthermore, the fixed pad members can have, for instance, a constant thickness, that is, can be designed without deepened portions for wholly or partly accommodating the thickness of the packing pieces.

## Claims

1. A rear fork pad for a bicycle, comprising:
a fixed pad member (2) with at least one mounting portion (14, 15) for mounting to a leg (17, 18) of a rear fork of a bicycle, and a first slot (19) having an open end (20) and a closed end (21), for receiving a portion of a rear wheel axle (22) which extends transversely to said first slot (19); and
at least one first packing piece (53) which bounds a second slot (73) having an open end (74) and a closed end (75), for receiving a portion of a rear wheel axle (22), which at least one first packing piece (53) abuts along a contact surface against the fixed pad member (2) to be clamped, with the fixed pad member (2), between a clamping element and a stop on the rear wheel axle (22) which extends through said second slot (73) bounded by the at least one first packing piece (53);
wherein the fixed pad member (2) and the at least one first packing piece (53) are arranged for positioning the at least one first packing piece (53) relative to the fixed pad member (2);
**characterized in that** the at least one first packing piece (53) covers at least an end portion of said first slot (19) for keeping the rear wheel axle (22) extending through the rear fork pad (1) spaced from the closed end (21) of said first slot (19).

2. A rear fork pad according to claim 1, wherein said second slot (73) extends at an angle relative to said first slot (19).

3. A rear fork pad according to claim 3, wherein centerlines of said slots (19, 73) in the fixed pad member (2) and in the first packing piece (53) intersect.

4. A rear fork pad according to claim 4, wherein said second slot (73) has a width between opposed boundary surfaces and wherein the closed end (75) of said second slot (73) is situated at a distance from the position where centerlines of said slots (19, 73) intersect that is equal to half of the width of said second slot (23).

5. A rear fork pad according to any one of claims 1-4, wherein the fixed pad member (2) forms a plate extending in a plane, having a first contour seen in a view transverse to said plane, and wherein the first packing piece (53) extends in a plane parallel to said plane and, seen in a view transverse to said plane, has a second contour and, in an area where said second contour projects outside said first contour, has thickened portions (81, 82, 83) which are contiguous to said fixed pad member (2) along an edge of the fixed pad member (2).

6. A rear fork pad according to claim 5, wherein said thickened portions (81) of said first packing piece (53) form a filling bounding said first slot (19) in the fixed pad member (2) and within said second contour.

7. A rear fork pad according to claim 5 or 6, wherein said thickened portions (82, 83) of said first packing piece (53) are contiguous to said fixed pad member (2) along an edge of the fixed pad member (2) remote from said first slot (19).

8. A rear fork pad system for a bicycle with rear fork pad according to any one of claims 1-7,
wherein the rear fork pad system further comprises at least one second packing piece (3), the at least one first packing piece (53) and the at least one second packing piece (3) being arranged for selective mounting against the fixed pad member (2),
which at least one second packing piece (3) bounds another second slot (23) having an open end (24) and a closed end (25), for receiving a portion of a rear wheel axle (22), and which at least one second packing piece (3) abuts along a contact surface against the fixed pad member (2), to be clamped, with the fixed pad member (2), between a clamping element and a stop on the rear wheel axle (22) which extends through said another second slot (23) bounded by the at least one second packing piece (3);
wherein the fixed pad member (2) and the at least one second packing piece (3) are arranged for positioning the at least one second packing piece (3) relative to the fixed pad member (2);
and wherein said first slot (19) and a first portion of said another second slot (23) remote from the open end (24) of said another second slot (23) form a common slot (19, 23) and that a second portion of said another second slot (23) between said first portion and the open end (24) of said another second slot (23) forms a continuation of said common slot (19, 23).

9. A rear fork pad system according to claim 8, wherein the fixed pad member (2) has a freely projecting leg (30) which in operating condition forms a lower boundary of said first slot (19), and wherein the second packing piece (3) has a freely projecting leg (27) which in operating condition forms a lower boundary of said another second slot (23) and which extends alongside and beyond a free end of said projecting leg (30) of the fixed pad member (2).

10. A rear fork pad system according to claim 8 or 9, wherein the fixed pad member (2) forms a plate extending in a plane, with a first contour seen in a view transverse to said plane, and wherein the second packing piece (3) extends in a plane parallel to said plane and, seen in a view transverse to said plane, has a second contour and wherein said rear fork pad, at least within a partial area within said second contour, has a greater thickness than in other areas within said first contour.

11. A rear fork pad system according to any one of claims 8-10, wherein the fixed pad member (2) forms a plate extending in a plane, having a first contour seen in a view transverse to said plane, and wherein the second packing piece (3) extends in a plane parallel to said plane and, seen in a view transverse to said plane, has a second contour and, in an area where said second contour projects outside said first contour, has thickened portions (31) which are contiguous to said fixed pad member (2) along an edge of the fixed pad member (2).

12. A rear fork pad system according to claim 11, wherein said thickened portions (31) of said second packing piece (3, 53) form a filling bounding said first slot (19) in the fixed pad member (2) and within said second contour.

13. A rear fork for a bicycle with rear fork pads (1, 51) according to any one of claims 1 to 7.

14. A rear fork according to claim 13, wherein at least one of the packing pieces (3, 53) is mounted on the inside of an associated fixed pad member.

15. A rear fork according to claim 13 or 14, wherein both rear fork pads are provided with a packing piece (3, 53) and wherein both packing pieces are mounted against the left or right side of the associated fixed pad member (2) and wherein at least said fixed pad members (2) or said packing pieces (3, 53) are mutually identical.

16. A bicycle frame with a rear fork according to any one of claims 13-15.

## Patentansprüche

1. Ein Hintergabelendstück für ein Fahrrad, umfassend:
ein festes Endstückelement (2) mit mindestens einem Montageabschnitt (14, 15) zum Montieren an ein Bein (17; 18) einer Hintergabel eines Fahrrads, und einem ersten Schlitz (19) mit einem offenen Ende (20) und einem geschlossenen Ende (21) zum Aufnehmen eines Abschnitts einer Hinterradachse (22), die sich quer zu dem ersten Schlitz (19) erstreckt; und
mindestens einem ersten Füllstück (53), das einen zweiten Schlitz (73), der ein offenes Ende (74) und ein geschlossenes Ende (75) zum Aufnehmen eines Abschnitts einer Hinterradachse (22) aufweist, begrenzt, wobei das mindestens eine erste Füllstück (53) entlang einer Kontaktfläche an dem festen Endstückelement (2) anliegt, um mit dem festen Endstückelement (2) zwischen einem Klemmelement und einem Anschlagstück auf der Hinterradachse (22) eingeklemmt zu werden, die sich durch den zweiten Schlitz (73) erstreckt, der durch das mindestens eine erste Füllstück (53) begrenzt ist;
wobei das feste Endstückelement (2) und das mindestens eine erste Füllstück (53) angeordnet sind, um das mindestens eine erste Füllstück (53) relativ zum festen Endstückelement (2) zu positionieren;
**dadurch gekennzeichnet, dass** das mindestens eine erste Füllstück (53) mindestens einen Endabschnitt des ersten Schlitzes (19) abdeckt, um die sich durch das Hintergabelendstück (1) erstreckende Hinterradachse (22) von dem geschlossenen Ende (21) des ersten Schlitzes (19) beabstandet zu halten.

2. Ein Hintergabelendstück nach Anspruch 1, wobei der zweite Schlitz (73) sich in einem Winkel relativ zu dem ersten Schlitz (19) erstreckt.

3. Ein Hintergabelendstück nach Anspruch 3, wobei die Mittellinien der Schlitze (19, 73) in dem festen Endstückelement (2) und in dem ersten Füllstück (53) einander schneiden.

4. Ein Hintergabelendstück nach Anspruch 4, wobei der zweite Schlitz (73) eine Breite zwischen gegenüberliegenden Begrenzungsflächen aufweist, und wobei das geschlossene Ende (75) des zweiten Schlitzes (73) in einem Abstand von der Position gelegen ist, an der die Mittellinien der Schlitze (19, 73) einander schneiden, der gleich der Hälfte der Breite des zweiten Schlitzes (23) ist.

5. Ein Hintergabelendstück nach einem der Ansprüche 1-4, wobei das feste Endstückelement (2) eine Platte bildet, die sich in einer Ebene erstreckt, mit einer ersten Kontur, gesehen in einer Ansicht quer zu der Ebene, und wobei das erste Füllstück (53) sich in einer zu der Ebene parallelen Ebene erstreckt, und, gesehen in einer Ansicht quer zu der Ebene, eine zweite Kontur aufweist, und in einem Bereich, in dem die zweite Kontur über die erste Kontur ragt, verdickte Abschnitte (81, 82, 83) aufweist, die sich an das feste Endstückelement (2) entlang einer Kante des festen Endstückelements (2) anschließen.

6. Ein Hintergabelendstück nach Anspruch 5, wobei die verdickten Abschnitte (81) des ersten Füllstücks (53) eine Füllung bilden, die den ersten Schlitz (19) in dem festen Endstückelement (2) und innerhalb der zweiten Kontur begrenzen.

7. Ein Hintergabelendstück nach Anspruch 5 oder 6, wobei die verdickten Abschnitte (82, 83) des ersten Füllstücks (53) sich an das feste Endstückelement (2) entlang einer von dem ersten Schlitz (19) entfernten Kante des festen Endstückelements (2) anschließen.

8. Ein Hintergabelendstücksystem für ein Fahrrad mit einem Hintergabelendstück nach einem der Ansprüche 1 - 7, wobei das Hintergabelendstücksystem des Weiteren zumindest ein zweites Füllstück (3) umfasst, wobei das mindestens eine erste Füllstück (53) und das mindestens eine zweite Füllstück (3) zum selektiven Montieren an dem festen Endstückelement (2) angeordnet sind,
wobei das mindestens eine zweite Füllstück (3) einen weiteren zweiten Schlitz (23), der ein offenes Ende (24) und ein geschlossenes Ende (25) zum Aufnehmen eines Abschnitts einer Hinterradachse (22) aufweist, begrenzt, und wobei das mindestens eine zweite Füllstück (3) entlang einer Kontaktfläche an dem festen Endstückelement (2) anliegt, um mit dem festen Endstückelement (2) zwischen einem Klemmelement und einem Anschlagstück auf der Hinterradachse (22) eingeklemmt zu werden, die sich durch den weiteren zweiten Schlitz (23) erstreckt, der durch das mindestens eine zweite Füllstück (3) begrenzt ist;
wobei das feste Endstückelement (2) und das mindestens eine zweite Füllstück (3) angeordnet sind, um das mindestens eine zweite Füllstück (3) relativ zum festen Endstückelement (2) zu positionieren;
und wobei der erste Schlitz (19) und ein erster Abschnitt des weiteren zweiten Schlitzes (23) entfernt vom offenen Ende (24) des weiteren zweiten Schlitzes (23) einen gemeinsamen Schlitz (19, 23) bilden, und dass ein zweiter Abschnitt des weiteren zweiten Schlitzes (23) zwischen dem ersten Abschnitt und dem offenen Ende (24) des weiteren zweiten Schlitzes (23) eine Fortsetzung des gemeinsamen Schlitzes (19, 23) bilden.

9. Ein Hintergabelendstücksystem nach Anspruch 8, wobei das feste Endstückelement (2) ein frei hervor ragendes Bein (30) aufweist, das im Betriebszustand eine untere Grenze des ersten Schlitzes (19) bildet, und wobei das zweite Füllstück (3) ein frei hervor ragendes Bein (27) aufweist, das im Betriebszustand eine untere Grenze des weiteren zweiten Schlitzes (23) bildet, und das sich entlang und über ein freies Ende des hervor ragenden Beins (30) des festen Endstückelements (2) hinaus erstreckt.

10. Ein Hintergabelendstücksystem nach Anspruch 8 oder 9, wobei das feste Endstückelement (2) eine Platte bildet, die sich in einer Ebene erstreckt, mit einer ersten Kontur, gesehen in einer Ansicht quer zu der Ebene, und wobei das zweite Füllstück (3) sich in einer zu der Ebene parallelen Ebene erstreckt, und, gesehen in einer Ansicht quer zu der Ebene, eine zweite Kontur aufweist, und wobei das Hintergabelendstück, zumindest innerhalb eines Teilbereichs innerhalb der zweiten Kontur, eine größere Dicke aufweist, als in anderen Bereichen innerhalb der ersten Kontur.

11. Ein Hintergabelendstücksystem nach einem der Ansprüche 8 - 10, wobei das feste Endstückelement (2) eine Platte bildet, die sich in einer Ebene erstreckt, mit einer ersten Kontur, gesehen in einer Ansicht quer zu der Ebene, und wobei das zweite Füllstück (3) sich in einer zu der Ebene parallelen Ebene erstreckt, und, gesehen in einer Ansicht quer zu der Ebene, eine zweite Kontur aufweist, und in einem Bereich, in dem die zweite Kontur über die erste Kontur ragt, verdickte Abschnitte (31) aufweist, die sich an das feste Endstückelement (2) entlang einer Kante des festen Endstückelements (2) anschließen.

12. Ein Hintergabelendstücksystem nach Anspruch 11, wobei die verdickten Abschnitte (31) des zweiten Füllstücks (3, 53) eine Füllung bilden, die den ersten Schlitz (19) in dem festen Endstückelement (2) und innerhalb der zweiten Kontur begrenzen.

13. Eine Hintergabel für ein Fahrrad mit Hintergabelendstücken (1, 51) nach einem der Ansprüche 1 bis 7.

14. Eine Hintergabel nach Anspruch 13, wobei mindestens eines der Füllstücke (3, 53) auf der Innenseite eines dazugehörigen festen Endstückelements montiert ist.

15. Eine Hintergabel nach Anspruch 13 oder 14, wobei beide Hintergabelendstücke mit einem Füllstück (3, 53) versehen sind, und wobei beide Füllstücke gegen die linke oder rechte Seite des dazugehörigen festen Endstückelements (2) montiert sind, und wobei mindestens die festen Endstückelemente (2) oder die Füllstücke (3, 53) zueinander identisch sind.

16. Ein Fahrradrahmen mit einer Hintergabel nach einem der Ansprüche 13 - 15.

## Revendications

1. Patte de cadre arrière pour une bicyclette, comprenant :
un élément de patte fixe (2), comportant au moins une partie de montage (14, 15) pour le montage sur un bras (17, 18) d'un cadre arrière d'une bicyclette, et une première encoche (19) ayant une extrémité ouverte (20) et une extrémité fermée (21) pour recevoir une partie d'un axe de roue arrière (22) qui s'étend transversalement à ladite première encoche (19) ; et
au moins une première pièce de garniture (53) qui délimite une deuxième encoche (73) ayant une extrémité ouverte (74) et une extrémité fermée (75) pour recevoir une partie d'un axe de roue arrière (22), ladite au moins une première pièce de garniture (53) étant en appui le long d'une surface de contact contre l'élément de patte fixe (2) afin d'être serrée, avec l'élément de patte fixe (2), entre un élément de serrage et une butée sur l'axe de roue arrière (22) qui s'étend dans ladite deuxième encoche (73) délimitée par ladite au moins une première pièce de garniture (53) ;
l'élément de patte fixe (2) et ladite au moins une première pièce de garniture (53) étant adaptés pour positionner ladite au moins une première pièce de garniture (53) par rapport à l'élément de patte fixe (2) ;
**caractérisée en ce que** ladite au moins une première pièce de garniture (53) recouvre au moins une partie d'extrémité de ladite première encoche (19) afin de maintenir l'axe de roue arrière (22) qui s'étend dans la patte de cadre arrière (1) espacé de l'extrémité fermée (21) de ladite première encoche (19).

2. Patte de cadre arrière selon la revendication 1, dans laquelle ladite deuxième encoche (73) s'étend en angle par rapport à ladite première encoche (19).

3. Patte de cadre arrière selon la revendication 3, dans laquelle les axes desdites encoches (19, 73) ménagées dans l'élément de patte fixe (2) et dans la première pièce de garniture (53) se coupent.

4. Patte de cadre arrière selon la revendication, 4, dans laquelle ladite deuxième encoche (73) a une largeur entre des surfaces limites opposées et dans laquelle l'extrémité fermée (75) de ladite deuxième encoche (73) est située à une distance du point d'intersection des axes desdites encoches (19, 73) qui est égale à la moitié de la largeur de ladite deuxième encoche (23).

5. Patte de cadre arrière selon l'une quelconque des revendications 1 à 4, dans laquelle l'élément de patte fixe (2) forme une plaque s'étendant dans un plan qui présente un premier contour, vu transversalement audit plan, et dans laquelle la première pièce de garniture (53) s'étend dans un plan parallèle audit plan et présente un deuxième contour, vu transversalement audit plan, et, dans une zone où ledit deuxième contour dépasse à l'extérieur dudit premier contour, présente des parties épaissies (81, 82, 83) qui sont contiguës audit élément de patte fixe (2) le long d'un bord de l'élément de patte fixe (2).

6. Patte de cadre arrière selon la revendication 5, dans laquelle lesdites parties épaissies (81) de ladite première pièce de garniture (53) forment un remplissage qui délimite ladite première encoche (19) dans l'élément de patte fixe (2) et à l'intérieur dudit deuxième contour.

7. Patte de cadre arrière selon la revendication 5 ou la revendication 6, dans laquelle lesdites parties épaissies (82, 83) de ladite première pièce de garniture (53) sont contiguës audit élément de patte fixe (2) le long d'un bord de l'élément de patte fixe (2) éloigné de ladite première encoche (19).

8. Système de patte de cadre arrière pour une bicyclette comportant une patte de cadre arrière selon l'une quelconque des revendications 1 à 7, dans lequel le système de patte de cadre arrière comprend en outre au moins une deuxième pièce de garniture (3), ladite au moins une première pièce de garniture (53) et ladite au moins une deuxième pièce de garniture (3) étant adaptées pour un montage sélectif contre l'élément de patte fixe (2),
ladite au moins une deuxième pièce de garniture (3) délimitant une autre deuxième encoche (23) ayant une extrémité ouverte (24) et une extrémité fermée (25) pour recevoir une partie d'un axe de roue arrière (22), et ladite au moins une deuxième pièce de garniture (3) étant en appui le long d'une surface de contact contre l'élément de patte fixe (2) afin d'être serrée, avec l'élément de patte fixe (2), entre un élément de serrage et une butée sur l'axe de roue arrière (22) qui s'étend dans ladite autre deuxième encoche (23) délimitée par ladite au moins une deuxième pièce de garniture (3) ;
dans lequel l'élément de patte fixe (2) et ladite au moins une deuxième pièce de garniture (3) sont adaptées pour positionner ladite au moins une deuxième pièce de garniture (3) par rapport à l'élément de patte fixe (2) ;
et dans lequel ladite première encoche (19) et une première partie de ladite autre deuxième encoche (23) éloignée de l'extrémité ouverte (24) de ladite autre deuxième encoche (23) forment une encoche commune (19, 23) et la deuxième partie de ladite autre deuxième encoche (23) entre ladite première partie et l'extrémité ouverte (24) de ladite autre deuxième encoche (23) forme un prolongement de ladite encoche commune (19, 23).

9. Système de patte de cadre arrière selon la revendication 8, dans lequel l'élément de patte fixe (2) a un bras dépassant librement (30) qui, en fonctionnement, forme une limite inférieure de ladite première encoche (19), et dans lequel la deuxième pièce de garniture (3) a un bras dépassant librement (27) qui, en fonctionnement, forme une limite inférieure de ladite autre deuxième encoche (23) et qui s'étend le long et au-delà d'une extrémité libre dudit bras dépassant (30) de l'élément de patte fixe (2).

10. Système de patte de cadre arrière selon la revendication 8 ou la revendication 9, dans lequel l'élément de patte fixe (2) forme une plaque qui s'étend dans un plan, avec un premier contour vu transversalement audit plan, et dans lequel la deuxième pièce de garniture (3) s'étend dans un plan parallèle audit plan et, vue transversalement audit plan, présente un deuxième contour, et dans lequel ladite patte de cadre arrière, au moins dans une zone partielle à l'intérieur dudit deuxième contour, a une épaisseur plus grande que dans d'autres zones à l'intérieur dudit premier contour.

11. Système de patte de cadre arrière selon l'une quelconque des revendications 8 à 10, dans lequel l'élément de patte fixe (2) forme une plaque qui s'étend dans un plan ayant un premier contour, vu transversalement audit plan, et dans lequel la deuxième pièce de garniture (3) s'étend dans un plan parallèle audit plan et, vue transversalement audit plan, présente un deuxième contour et, dans une zone où ledit deuxième contour dépasse à l'extérieur dudit premier contour, présente des parties épaissies (31) qui sont contiguës audit élément de patte fixe (2) le long d'un bord de l'élément de patte fixe (2).

12. Système de patte de cadre arrière selon la revendication 11, dans lequel lesdites parties épaissies (31) de ladite deuxième pièce de garniture (3, 53) forment un remplissage qui délimite ladite première encoche (19) dans l'élément de patte fixe (2) et à l'intérieur dudit deuxième contour.

13. Cadre arrière pour une bicyclette, comportant des pattes de cadre arrière (1, 51) selon l'une quelconque des revendications 1 à 7.

14. Cadre arrière selon la revendication 13, dans lequel l'une au moins des pièces de garniture (3, 53) est montée sur la face intérieure d'un élément de patte fixe associé.

15. Cadre arrière selon la revendication 13 ou la revendication 14, dans lequel les deux pattes de cadre arrière comportent une pièce de garniture (3, 53) et dans lequel les deux pièces de garniture sont montées contre la face gauche ou droite de l'élément de patte fixe (2) associé et dans lequel au moins lesdits éléments de patte fixes (2) ou lesdites pièces de garniture (3, 53) sont mutuellement identiques.

16. Cadre de bicyclette, comportant un cadre arrière selon l'une quelconque des revendications 13 à 15.
